# EUROPÄISCHE PATENTSCHRIFT

(11) **EP 0 952 170 B1**
(45) Veröffentlichungstag und Bekanntmachung des Hinweises auf die Patenterteilung: **22.12.2004**
(21) Anmeldenummer: 99107081.4
(22) Anmeldetag: 12.04.1999
(51) Int. Cl.: C08G 18/81, C09D 175/16

(54) **Wässriges Beschichtungssystem aus UV-härtenden Isocyanatgruppen aufweisenden Urethan(meth) acrylatisocyanaten**
Aqueous coating system from UV-curing isocyanate groups containing urethane(meth)acrylisocyanates
Système de revêtement aqueux durcissable par rayonnement UV à partir d'uréthane(meth)acryleisocyanates contenant des groupes d'isocyanate

(30) Priorität: 23.04.1998 DE 19818312
(43) Veröffentlichungstag der Anmeldung: 27.10.1999
(73) Patentinhaber: Bayer MaterialScience AG, 51368 Leverkusen (DE)
(72) Erfinder: Hovestadt, Wieland Dr., 42799 Leichlingen (DE); Fischer, Wolfgang Dr., 40668 Meerbusch (DE); Bock, Manfred Dr., 51375 Leverkusen (DE); Engbert, Theodor Dr., 50968 Köln (DE); Kahl, Lothar Dr., Fracc, Condado de Sayavedra, Colonia (MX)

(56) Entgegenhaltungen:
- EP-A- 0 798 323
- DE-A- 2 239 411
- DE-A- 3 014 733
- US-A- 4 006 024
- JOURNAL OF APPLIED POLYMER SCIENCE, Bd. 58, Nr. 7, 14. November 1995 (1995-11-14), Seiten 1114-1124, XP000537862 new york, US

## Beschreibung

Die Erfindung betrifft ein wäßriges Beschichtungssystem, bei dem durch UV-Härtung von (Meth)Acryloylgruppen enthaltenden Bestandteilen trockene, handhabbare Oberflächen entstehen. Durch Vernetzung von NCO-Gruppen enthaltenden Bestandteilen mit aktiven Wasserstoff enthaltenden Bestandteilen werden die gewünschten Eigenschaften der daraus hergestellten Beschichtungen erzielt. Die Bindemittelkomponente weist sowohl (Meth)Acryloylgruppen als auch freie NCO-Gruppen auf. Die daraus hergestellte Beschichtung weist nach Härtung auch an nicht oder nur schlecht belichteten Stellen ausreichende Resistenz auf. Weiterhin betrifft die Erfindung die Verwendung dieser Beschichtungssysteme.

Die Härtung von (Meth)Acryloylgruppen aufweisenden Beschichtungssystemen durch UV-initiierte, radikalische Polymerisation ist bekannt und technisch etabliert. Sie ist eine der schnellstens Härtungsmethoden in der Beschichtungstechnologie. UV-härtende Lacke weisen jedoch durchaus Nachteile auf, wie z.B. hohen Volumenschrumpf bei der Härtung, was zu Haftungsproblemen führen kann. Die systemimmanente hohe Vernetzungsdichte führt zu Sprödigkeit, mangelnde Elastizität und mangelnde Schlagzähigkeit. Des weiteren ist die Aushärtung von UV-härtenden (Meth)Acryloylgruppen aufweisenden Beschichtungssystemen an die Verfügbarkeit einer ausreichenden Strahlendosis entsprechender Wellenlänge gebunden. Schlecht belichtete Bereiche härten nur in reduziertem Ausmaß, was zu empfindlichen Verlusten in der Oberflächenresistenz führt, nicht belichtete Bereiche härten überhaupt nicht.

Beschichtungen auf Basis von aktiven Wasserstoffatomen enthaltenden wäßrigen Bindemitteln, vorzugsweise Polyolen und Polyisocyanaten sind bekannt (z.B. EP-A 358 979).

Durch die breite Auswahl der Reaktionspartner können die technischen Eigenschaften der Beschichtungen wie Haftung, Elastizität, Schlagzähigkeit und Wetterstabilität in einen weiten Bereich variiert werden. Die Aushärtung entsprechender wäßriger Zweikomponenten-Polyurethansysteme erfordert im Vergleich zu strahlenhärtenden Systemen jedoch eine lange Zeitspanne und vorzugsweise hohe Temperaturen. UV-Licht ist aber nicht erforderlich.

Kombinationen beider Härtungsarten durch UV-Strahlung und durch Polyurethan-Vernetzung sind im Bereich von Lacken auf Lösemittelbasis als sogenannte (dual cure) Systeme ebenfalls bekannt. So beschreibt z.B. die US-A 4 342 793 härtbare Harzzusammenstzungen aus einem strahlenhärtbaren Reaktivverdünner, das sind niedermolekulare Arcrylsäureester, einem gesättigten Polyol und einem Polyisocyanat. Die Härtung erfolgt durch Bestrahlung um den Reaktivverdünner zu polymerisieren und danach durch thermische Härtung zur Bildung eines Polyurethans aus dem Polyol und dem Polyisocyanat.

Der Nachteil derartiger Systeme besteht darin, daß der Lösemittelgehalt und damit die Emission relativ hoch sind. Außerdem kann bei ungünstiger Bestrahlung nicht eingebauter Reaktiwerdünner im gehärteten Lackfilm zurückbleiben. Dieser kann dann z.B. bei Hautkontakt mit dem Lackfilm zu Problemen führen. Außerdem können die Eigenschaften des Lackfilms wie z.B. Härte, physikalische und chemische Resistenz negativ beeinflußt werden.

Die Aufgabe der vorliegenden Erfindung bestand nun darin, ein Beschichtungssystem zur Verfügung zu stellen, das auf wäßrigen Bindemitteln basiert und das durch UV-Härtung schnelle Handhabbarkeit der lackierten Teile zuläßt, sowie durch Vemetzung von NCO-Gruppen aufweisenden Bestandteilen mit aktiven Wasserstoffatomen aufweisenden Bestandteilen, vorzugsweise Polyolen, ein anwendungsgerechtes Eigenschaftsprofil einstellbar macht und darüber hinaus eine ausreichende Härtung auch auf nicht oder schlecht belichteten Bereichen ermöglicht.

Überraschenderweise wurde gefunden, daß in Beschichtungssystemen, die im wesentlichen bestehen auf Urethan(Meth)acrylaten mit (Meth)Acryloylgruppen und freien NCO-Gruppen, Polyisocyanaten und wäßrigen Polyolen nach UV-Härtung, die zu trockenen, handhabbaren Lackfilmen führt, die Vernetzung durch NCO-Reaktion komplett abläuft und zu Oberflächen hoher chemischer und mechanischer Resistenz führt. Andererseits ist bei schlechter Belichtungssituation und einer gewissen Restdoppelbindungsdichte die Vernetzung über NCO-Reaktion und damit ein minimal erforderliches Resistenzniveau gewährleistet. Dies war um so überraschender, da davon auszugehen war, daß beide Reaktionsprozesse sich gegenseitig behindern und die schnelle UV-initiierte Polymerisation die langsamere NCO-Reaktion "einfriert", d.h. die Reaktion von NCO-Gruppen mit aktiven Wasserstoff enthaltenden Komponenten nicht komplett abläuft.

Gegenstand der Erfindung sind Beschichtungssysteme aus
a) einem Urethan(meth)acrylat, das (Meth)Acryloylgruppen aufweist, welches ein Reaktionsprodukt aus (Meth)-Acryloylgruppen aufweisenden, einwertigen Alkoholen und mehrwertigen Isocyanaten ist und das Verhältnis von NCO-Gruppen zu OH-Gruppen 1 : 0,2 Val bis 1 : 0,8 Val beträgt,
b) gegebenenfalls einem weiteren Polyisocyanat,
c) einem die radikalische Polymerisation intiierenden UV-Initiator und
d) einem oder mehreren aktive Wasserstoffatome enthaltenden wäßrigen Bindemitteln.

Vorzugsweise wird das vorliegende Beschichtungssystem in zwei Komponenten hergestellt, wobei die Komponente I) vorzugsweise die Bestandteile ((a) + (b) enthält, die zweite Komponente II) die Bestandteile ((c) + (d)).

Zur Erzielung besserer lacktechnischer Eigenschaften können die Komponenten I und/oder II zusätzlich
e) einen UV-Absorber mit einem Asorptionsbereich bis maximal 390 nm und
f) einen HALS-Stabilisator,
g) übliche Lackadditive,
h) Katalysatoren zur Beschleunigung der NCO-Reaktion und
i) im Sinne der Vernetzung inerte Colösemittel enthalten.

Komponente I) und Komponente II) werden so kombiniert, daß ein Verhältnis von NCO-Gruppen mit NCO-Reaktiven Gruppen von 2 zu 1 bis 0,5 zu 1, vorzugsweise 1,5 zu 1 bis 0,8 zu 1, besonders bevorzugt 1,3 zu 1 bis 1 zu 1 eingestellt wird.

Verbindungen gemäß a) werden hergestellt aus (Meth)Acryloylgruppen aufweisenden einwertigen Alkoholen und Di- oder Polyisocyanaten. Herstellverfahren für Urethan(meth)acrylate sind grundsätzlich bekannt und beschrieben (z.B. DE-A 1 644 798, DE-A 2 115 373, DE-A 2 737 406). Für die erfindungsgemäßen Urethan(meth)acrylate ist das Verhältnis von NCO-Gruppen zu OH-Gruppen 1 zu 0,2 bis 1 zu 0,8 Val, besonders bevorzugt von 1 zu 0,3 bis 1 zu 0,6 Val.

Unter (Meth)Acryloylgruppen aufweisenden einwertigen Alkoholen sind sowohl eine freie Hydroxylgruppe aufweisende Ester der Acrylsäure oder Methacrylsäure mit zweiwertigen Alkoholen zu verstehen wie beispielsweise 2-Hydroxyethyl-, 2- oder 3-Hydroxypropyl- oder 2-, 3- oder 4-Hydroxybutyl-(meth)acrylat als auch beliebige Gemische aus derartigen Verbindungen. Außerdem kommen auch einwertige (Meth)Acryloylgruppen aufweisende Alkohole oder im wesentlichen aus derartigen Alkoholen bestehende Umsetzungsprodukte in Betracht, die durch Veresterung von n-wertigen Alkoholen mit (Meth)Arylsäure erhalten werden, wobei als Alkohole auch Gemische von unterschiedlichen Alkoholen eingesetzt werden können, so daß n für eine ganze oder in statistische Mittel gebrochene Zahl von größer 2 bis 4 vorzugsweise 3 steht, und wobei pro Mol der genannten Alkohole von (n-0,8) bis )n-1,2), vorzugsweise (n-1) Mol (Meth)Acrylsäure eingesetzt werden.

Zu diesen Verbindungen bzw. Produktgemischen gehören beispielsweise die Umsetzungsprodukte von i) Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen wie beispielsweise Ethylenglykol oder Propylenglykol mit (ii) (Meth)Acrylsäure im genannten Molverhältnis. Diese Verbindungen weisen ein mittleres Molekulargewicht Mn von 116 bis 1 000, vorzugsweise von 116 bis 750 und besonders bevorzugt von 116 bis 158 auf.

Zur Herstellung der erfindungsgemäßen Urethan(meth)acrylate a) sind grundsätzlich alle Di- oder Polyisocyanate geeignet, wie Butylendiisocyanat, Hexamethylendiisocyanat (HDI), 1-Isocyanato-3,3,5-trimethyl-5-isocyanatormethyl-cyclohexan (IPDI) und/oder (Bis(isocyanatocyclohexyl)-methan oder andere aliphatischer Diisocyanate oder Mischungen dieser Diisocyanate oder "Lackpolyisocyanate" auf Basis dieser Diisocyanate.

Unter "Lackpolyisocyanaten" auf Basis von Diisocyanaten sind die an sich bekannten Biuret-, Urethan-, Uretdion- und/oder Isocyanuratgruppen aufweisenden Derivate dieser Diisocyanate zu verstehen. Die Verfahren zur Herstellung derartiger "Lackpolyisocyanate" sind beispielsweise in den US-Patentschriften 3 124 605, 3 358 010, 3 903 126, 3 903 127, 3 975 622 oder 4 324 879 beschrieben.

Möglich ist auch der Einsatz aromatischer Polyisocyanate, z.B. Lackpolyisocyanate" auf Basis von 2,4-Diisocanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Grundsätzlich möglich ist selbstverständlich auch der Einsatz beliebiger Gemische der beispielhaft genannten Polyisocyanate.

Um eine bessere Einarbeitbarkeit der Urethan(meth)acrylate a) in die wäßrigen Bindemittel d) zu ermöglichen, können auch hydrophilierte Polyisocyanate alleine oder in Mischung mit den oben beschriebenen nicht hydrophilierten Polyisocyanaten eingesetzt werden. Die Hydrophilierung kann z.B. anionisch, kationisch oder nichtionisch über interne oder externe Emulgatoren wie Polyether erfolgen. Derartige Polyisocyanate werden z.B. in den Patentschriften EP-A 443 138,. EP-A 469 389, EP-A 486 881, EP-A 510 438, EP-A 540 985, EP-A 645 410, EP-A 697 424 oder EP-A 728 785 beschrieben.

Die beschriebene Additionsreaktion kann in an sich bekannter Weise mittels geeigneter Katalysatoren, wie beispielsweise Zinnoctoat, Dibutylzinndilaurat oder tertiären Aminen beschleunigt werden.

Es ist möglich, das resultierende, gegebenenfalls freie NCO-Gruppen enthaltende Urethan(meth)arylat a) gegen vorzeitige Polymerisation durch Zugabe geeigneter Inhibitoren und Antioxidantien wie beispielsweise Phenole, Hydrochinone, gegebenenfalls auch Chinonen wie z.B. 2,5-Ditert-butylchinon zu stabilisieren. Diese Inhibitoren werden in Mengen von jeweils 0,001 bis 0,3 Gew.-% während oder im Anschluß an die Herstellung zugegeben. Die Produkte a) können gegebenenfalls in, im Sinne der Herstellung und späteren Anwendung, inerten Lösemitteln hergestellt werden, die dann als Colösemittel i) gelten.

Als Komponente b) aufgeführte gegebenenfalls einzusetzende weitere Polyisocyanate können alle die Polyisocyanate eingesetzt werden, die auch zur Herstellung der Urethan(meth)acrylate verwendet werden können. Bevorzugt sind hydrophilierte oder nicht hydrophilierte aliphatische "Lackpolyisocyanate" auf Basis HDI, IPDI oder Bis(isocyanatocyclohexyl)urethan oder Mischungen dieser "Lackpolyisocyanate".

Zur Senkung der Viskosität kann die Komponente I gegebenenfalls zusätzlich strahlenhärtbare Reaktivverdünner wie niedermolekulare Acrylsäureester enthalten.

Das Verhältnis der Methacryloylgruppen der Komponente a) zu der Summe der freien Isocyanatgruppen der Komponenten a) und b) liegt zwischen 0,2 zu 5,0 Val und 5 zu 0,2 Val, vorzugsweise zwischen 0,5 zu 2,0 Val und 2,0 zu 0,5 Val.

UV-Initiatoren entsprechend c) können sein 2-Hydroxyphenylketone wie z.B. 1-Hydroxycyclohexylphenylketon, Benzilketale wie z.B. Benzildimethylketal, Acylphosphinoxide wie z.B. Bis-(2,4,6-trimethylbenzoyl)-phenylphosphinoxid, Benzophenon und dessen Derivate bzw. Mischungen aus den verschiedenen UV-Initiatortypen.

Als Komponente d) können alle auch in der wäßrigen Zweikomponenten-Polyurethanbeschichtungstechnologie üblichen Harzdispersionen eingesetzt werden.

Derartige Harze und die Verfahren zur Herstellung dieser Harze sind literaturbekannt. So können die Harze z.B. aus der Klasse der Polyester, Polyacrylate, Polyurethane, Polyharnstoffe, Polycarbonate oder Polyether aufgebaut sein. Auch der Einsatz von beliebigen Hybriddispersionen oder beliebigen Mischungen verschiedener Dispersionen ist möglich. In der Regel sind die Harze hydroxy- oder aminofunktionell. In Ausnahmefällen ist es aber auch möglich, nichtfunktionelle Dispersionen als Bindemittelkomponente einzusetzen. Möglich, aber nicht bevorzugt, ist auch der Einsatz von Harzdispersionen, die neben den Hydroxy- oder Aminofünktionen zusätzlich ungesättigte, zur UV-Härtung geeignete Funktionen enthalten.

Zur Wetterstabilität der gehärteten Lackschicht kann ein UV-Absorber e) mit einem Absorptionsbereich bis maximal 390 nm und ein HALS-Stabilisator zugegeben werden. Geeignete UV-Absorber sind vom Triphenyltriazintyp z.B. Tinuvin®400 (Ciba) oder vom Typ der Oxalsäuredianilide z.B. Sanduvor®3206 (Clariant). Die UV-Absorber werden vorzugsweise in Mengen von jeweils 0,5 bis 3,5 % bezogen auf festes Bindemittel zugegeben.

Geeignete HALS-Stabilisatoren f) sind die handelsüblichen Typen wie z.B. Tinuvin®292 oder Tinuvin®123 (Ciba) oder Sanduvor®3058 (Clariant). Diese HALS-Stabilisatoren werden bevorzugt in Mengen von 0,5 % bis 2,5 % bezogen auf festes Bindemittel zugeben.

Als Lackadditive g) seien beispielhaft Verlaufsmittel, Entlüftungsmittel, Entschäumer, Verdicker und Thixotropiermittel genannt.

Gegebenenfalls können zur Beschleunigung der Polyurethan-Vernetzungsreaktion Katalysatoren h) zugesetzt werden. Geeignet sind alle aus der Zweikomponenten-Polyurethantechnologie bekannten Katalysatoren wie beispielsweise Zinnoctoat, Dibutylzinndilaurat oder tertiäre Amine.

Die Härterkomponente I weist bei 23°C im allgemeinen eine Viskosität von 50 bis 10 000, vorzugsweise 50 bis 2 000 mPa·s (D= 40) auf. Falls erforderlich, können die Polyisocyanate mit geringen Mengen an inerten Lösemitteln abgemischt werden, um die Viskosität auf einen Wert innerhalb der genannten Bereiche abzusenken. Die Menge derartiger Lösemittel wird jedoch maximal so bemessen, daß in den letztendlich erhaltenen erfindungsgemäßen Beschichtungsmitteln maximal 20 Gew.-%, bevorzugt 10 Gew.-%, Lösemittel vorliegt, wobei auch das gegebenenfalls in den Harzdispersionen d) noch vorliegende Lösemittel mit in die Berechnungen eingeht. Als Lösemittel geeignet sind beispielsweise aliphatische oder aromatische Kohlenwasserstoffe, wie Xylol, Toluol, Solventnaphtha oder beispielsweise N-Methylpyrrolidon, Diethylenglykoldimethyleter, Aceton, Methylethylketon, Methylisobutylketon, Ethylacetat, Butylacetat, Methoxypropylacetat oder Mischungen dieser oder anderer inerter Lösemittel.

Zur Herstellung der wäßrigen Bindemittelkombination wird die Härterkomponentze I in der wäßrigen Harzkomponente II emulgiert. Dabei wird mit Wasser die erforderliche Verarbeitungsviskosität eingestellt. In vielen Fällen reichen einfache Emulgiertechniken z.B. mit einem mechanischen Rührer oder oftmals auch eine einfache Mischung der beiden Komponenten per Hand aus, um Beschichtungen mit sehr guten Eigenschaften zu erreichen. Es können aber auch Mischtechniken mit höherer Scherenergie, wie z.B. der Strahldispergierung, wie sie in Farbe & Lack 102/3, 1996, S. 88-100 beschrieben wird, eingesetzt werden.

Die Herstellung der erfindungsgemäßen Beschichtungen kann nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Streichen, Rollen, Walzen oder Rakeln erfolgen.

Die Trocknung und Aushärtung der Beschichtung erfolgt bevorzugt durch
1. Ablüftung des Wassers und der gegebenenfalls zugegebenen Colösemittel bei Raumtemperatur oder gegebenenfalls erhöhter Temperatur, vorzugsweise bis 100°C.
2. UV-Härtung, geeignet sind handelsübliche Quecksilber-Hoch- bzw. Mitteldruckstrahler, diese Strahler können durch andere Elemente dotiert sein und weisen bevorzugt eine Leistung von 80 bis 240 W/cm Lampenlänge auf.
3. Nachvernetzung der NCO-haltigen Komponenten mit den aktive Wasserstoffatome enthaltenden Bestandteilen. Dies kann bei Raumtemperatur oder forciert bei erhöhter Temperatur, vorteilhaft bis höchstens 150°C erfolgen.

Die Erfindung betrifft weiterhin die Verwendung der erfindungsgemäßen Beschichtungssysteme zur Herstellung von Überzügen auf den verschiedensten Substraten und Materialien wie Holz, Metallen, Kunststoffen usw.

Vorzugsweise werden die erfindungsgemäßen Beschichtungssysteme zur Lackierung von Karosserieteilen eingesetzt.

### Beispiele

Alle Angaben in % beziehen sich auf das Gewicht. Viskositätsmessungen wurden in einem Kegel-Platte-Viskosimetter nach DIN 53019 bei D = 40 durchgeführt.

Die genannten Handelsbezeichnungen sind, auch wenn nichts eigens vermerkt, Warenzeichen.

### Verwendete aktive Wasserstoffatome enthaltende Bindemittel

### Bindemittel A

Colöserfreie wäßrige Polyacrylatdispersion auf Basis von Methylmethacrylat, Butylacrylat, Butylmethacrylat, Styrol, Hydroxypropylmethacrylat und Acrylsäure, Di.tert.-butylperoxid als Initiator und Dimethylethanolamin als Neutralisationsmittel. Der Feststoffgehalt liegt bei ca. 50 % bei einer Viskosität von ca. 500 mPa·s (23°C D = 40). Die Säurezahl beträgt ca. 12 mg KOH/g Substanz, der OH-Gehalt 2,2 %, der pH-Wert ca. 7,9.

### Bindemittel B

Colöserfreie wäßrige urethanmodifizierte Polyesterdispersion auf Basis von Trimethylolpropan, Neopentylglykol, Hexandiol-1,6, Cyclohexandimethanol-1,4,Hexahydrophthalsäureanhydrid, Adipinsäure, Dimethylolpropionsäure und Isophorondiisocyanat sowie Dimethylethanolamin als Neutralisationsmittel. Der Feststoffgehalt liegt bei ca. 42 % bei einer Viskosität von ca. 1 000 mPa·s (23°C, D = 40). Die Säurezahl beträgt ca. 8 mg KOH/g Substanz, der OH-Gehalt 1,5 % der pH-Wert ca. 8,4.

### Herstellung von erfindungsgemäßen Urethan(meth)acrylaten

### Beispiel 1

In einem Rührkessel, ausgerüstet mit Thermoelement, Tropfrichter, Rückflußkühler, Gaszuführung und Gasabführung werden 1268,7 g eines HDI-Isocyanurates mit 23 % NCO-Gehalt, 0,96 g Dibutylzinndilaurat und 1,92 g 2,6-Di-tert.-butylkreson eingewogen. Unter Rühren wird das dreifache Kesselvolumen Luft pro Stunde durchgeleitet und das sechsfach Kesselvolumen Stickstoff pro Stunde übergeleitet. Es wird auf 50°C aufgeheizt und ab 50°C 266,8 g Hydroxyethylacrylat so zugetropft, daß mit der exothermen Reaktion die Temperatur auf maximal 60°C ansteigt. Nach kompletter Zugabe des Hydroxyethylacrylats, Dauer ca. 6 bis 8 Stunden, wird noch eine Stunde bei 60°C nachgerührt. Es entsteht eine Urethanacrylatlösung mit einem NCO-Gehalt von 11,5 %.

### Beispiel 2

In einem Rührkessel, ausgerüstet mit Thermoelement, Tropfrichter, Rückflußkühler, Gaszuführung und Gasabführung werden 1 268,7 f eines HDI-Isocyanurates mit 23 % NCO-Gehalt 519,4 g Methoxypropylacetat 0,96 g Dibutylzinndilaurat und 1,92 g 2,6-Di-tert.-butylkresol eingewogen. Unter Rühren wird das dreifache Kesselvolumen Luft pro Stunde durchgeleitet und das sechsfache Kesselvolumen Stickstoff pro Stunde übergeleitet. Es wird auf 50°C aufgeheizt und ab 50°C 806 g Hydroxyethylacrylat so zugetropft, daß mit der exothermen Reaktion die Temperatur auf maximal 60°C ansteigt. Nach kompletter Zugabe des Hydroxyethylacrylats, Dauer ca. 6 bis 8 Stunden, wird noch eine Stunde bei 60°C nachgerührt. Es entsteht eine Urethanacrylatlösung ohne freie NCO-Gruppen.

Herstellung, Applikation und Prüfung von Beschichtungssystemen.
Das NCO/OH-Verhältnis beträgt 1/1.

### Beispiel 3

### Komponente 2:

- 132,6 Tle.: Wäßrige Polyacrylatdispersion, 46 % in Wasser/Solventnaphtha 100/2-Butoxyethanol, neutralisiert mit Dimethylethanolamin 44,6:6,5:1,6:1,5 mit einem OH-Gehalt von ca. 4,5 % bezogen auf Festharz (Bayhydrol®VP LS 2271, Bayer AG).
- 145,9 Tle.: Wäßrige urethanmodifizierte Polyesterdispersion, 42 % in Wasser/N-Methylpyrrolidon, neutralisiert mit Dimethylethanolamin 54:3:1 mit einem OH-Gehalt von ca. 3,8 % bezogen auf Festharz (Bayhydrol®VP LS 2231, Bayer AG).
- 65,4 Tle.: Wasser

### Komponente 1:

| | |
|---|---|
| 151,9 Tle. | Urethanacrylat entsprechend Beispiel 1 |
| 83,9 Tle. | Solventnaphtha 100/2-Butoxyethanol 4/1 |
| 11,1 Tle. | Tinuvin®1130 (Ciba), 50 %ig in Butyldiglykolacetat |
| 5,5 Tle. | Tinuvin®292 (Ciba), 50 %ig in Butyldiglykolacetat |
| 1,8 Tle. | BYK 345® (Byk) |
| 1,8 Tle. | BYK 333® (Byk), 25 %ig in Wasser |
| 3,5 Tle. | Irgacure 184® (Ciba) 50 %ig in Hexandioldiacrylat |

Beide Komponenten werden mittels Düsenstrahldispergierung entsprechend DE-A 19510651 mit einer Düse von 0,1 mm Durchmesser bei 50 bar homogen vermischt und mit einer handelsüblichen Spritzpistole auf eine, mit einem pigmentierten 2-Komponenten-Polyurethanlack vorbeschichtete Metallplatte appliziert, so daß eine Filmdicke von ca. 120 g/cm² resultiert.

Die Trocknung der nassen Schicht erfolgt durch 5 Minuten Ablüftung bei Raumtemperatur, 10 Minuten Vortrocknung bei 80°C, anschließender UV-Härtung (1 m/Minute Bandgeschwindigkeit, 1 Hg-Hochdruckstrahler 80 W/cm, 10 cm Strahlerabstand). Die weitere Trocknung erfolgt bei Raumtemperatur.

Geprüft wurde die resultierende Härte durch Pendeldämpfüng nach König, sowie die Resistenz gegen Lösemittel nach 1 Stunde, 1 Tag und nach 7 tagen. Die Ergebnisse zeigt Tabelle 1.

### Beispiel 4

### Komponente 2:

| | |
|---|---|
| 129,7 Tle. | Bindemittel A |
| 144,5 Tle. | Bindemittel B |
| 91,6 Tle. | Wasser |

### Komponente 1:

Entsprechend Komponente 2 aus Beispiel 3 jedoch 63,7 Tle. Methoxypropylacetat statt 83,9 Tle. Solventnaphtha 100/2-Butoxyethanol 4/1.

Die Vermischung, Applikation, Trocknung und Prüfung des Lackes erfolgt wie in Beispiel 3.

### Beispiel 5

### Komponente 2:

| | |
|---|---|
| 98,0 Tle. | Bindemittel A |
| 96,5 Tle. | Wasser |

### Komponente 1:

| | |
|---|---|
| 72,7 Tle. | Urethanacrylat aus Beispiel 1 |
| 96,0 Tle. | Urethanacrylat aus Beispiel 2 |
| 81,1 Tle. | Methoxypropylacetat |
| 6,7 Tle. | Sanduvor®3206 (Clariant) 80 % in Xylol |
| 2,7 Tle. | BYK®306 (Byk) |
| 10,9 Tle. | Irgacure®185 (Ciba) 50 % in Hexandioldiacrylat |

Die Vermischung, Applikation, Trocknung und Prüfung des Lackes erfolgt wie in Beispiel 3.

### Beispiel 6 (Vergleich)

### Komponente 2:

| | |
|---|---|
| 176,6 Tle. | Polyacrylatdispersion aus Beispiel 3 |
| 194,3 Tle. | urethanmodifiziert Polyesterdispersion aus Beispiel 3 |
| 55,7 Tle. | Wasser |

### Komponente 1:

| | |
|---|---|
| 110,3 Tle. | Desmodur®VP LS 2025/1 (Bayer) NCO-Gehalt 23 % |
| 42,9 Tle. | Solventnaphtha 100/2-Butoxyethanol 4/1 |
| 11,1 Tle. | Tinuvin®1130 (Ciba), 50 %ig in Butyldiglykolacetat |
| 5,5 Tle. | Tinuvin®292 (Ciba), 50 %ig in Butyldiglykoacetat |
| 1,8 Tle. | BYK®345 (Byk) |
| 1,8 Tle. | BYK®333 (Byk) |

Die Vermischung, Applikation, Trocknung und Prüfung des Lackes erfolgt wie in Beispiel 3.

### Ergebnisse

| **Beispiel** | **3** | **4** | **5** | **6** |
|---|---|---|---|---|
| Pendeldämpfung¹⁾ | | | | |
| nach 1 Stunde | 31 | 30 | 104 | 6 |
| nach 24 Stunden | 74 | 77 | 134 | 14 |
| nach 168 Stunden | 129 | 128 | 146 | 85 |
| Lösemittelresistenz²⁾ | | | | |
| nach 24 Stunden | 2234 | 1134 | 0024 | 4455 |
| nach 168 Stunden | 0023 | 0023 | 0003 | 1135 |

| | | | | |
|---|---|---|---|---|
| ¹⁾ in s nach König | | | | |
| ²⁾ 5 min Einwirkzeit Xylol/Methoxypropylacetat/Ethylacetat/Aceton 0 = unverändert 5 = gelöst/zerstört | | | | |

## Patentansprüche

1. Beschichtungssysteme aus
a) einem Urethan(meth)acrylat, das (Meth)Acryloylgruppen aufweist, welches ein Reaktionsprodukt aus (Meth)-Acryloylgruppen aufweisen, einwertigen Alkoholen und mehrwertigen Isocyanaten ist, wobei das Verhältnis von NCO-Gruppen zu OH-Gruppen 1 : 0,2 Val bis 1 : 0,8 Val beträgt,
b) gegebenenfalls einem weiteren Polyisocyanat,
c) einem die radikalische Polymerisation initiierenden UV-Initiator und
d) einem oder mehrere aktive Wasserstoffatome enthaltenden wäßrigen Bindemittel.

2. Beschichtungssystem gemäß Anspruch 1, **dadurch gekennzeichnet, daß** das aktive Wasserstoffatome enthaltende wäßrige Bindemittel ein Polyol ist.

3. Beschichtungssystem gemäß Anspruch 1, **dadurch gekennzeichnet, daß** das Verhältnis der (Meth)Acryloylgruppen der Komponente a) zu der Summe der freien Isocyanatgruppen der Komponenten a) und b) zwischen 0,5:2,0 Val und 2,0:0,5 Val liegt.

4. Beschichtungssysteme gemäß Anspruch 1, **dadurch gekennzeichnet, daß** ein UV-Absorber mit einem Absorptionsbereich bis 390 nm enthalten ist.

5. Beschichtungssystem gemäß Anspruch 1, **dadurch gekennzeichnet, daß** ein HALS-Amin enthalten ist.

6. Verwendung der Beschichtungssysteme gemäß Anspruch 1 zur Herstellung von Überzügen.

7. Verwendung der Beschichtungssysteme gemäß Anspruch 1 zur Lackierung von Karosserieteilen.

## Claims

1. Coating systems comprising
a) a urethane (meth)acrylate having (meth)acryloyl groups that is a reaction product of polyfunctional isocyanates and monohydric alcohols having (meth)acryloyl groups, the ratio of NCO groups to OH groups being 1 : 0.2 eq to 1 : 0.8 eq,
b) optionally a further polyisocyanate,
c) a UV initiator which initiates polymerization by a free radical mechanism, and
d) one or more aqueous binders containing active hydrogen atoms.

2. Coating system according to Claim 1, **characterized in that** the aqueous binder containing active hydrogen atoms is a polyol.

3. Coating system according to Claim 1, **characterized in that** the ratio of the (meth)acryloyl groups of component a) to the sum of the free isocyanate groups of components a) and b) is between 0.5 : 2.0 eq and 2.0 : 0.5 eq.

4. Coating systems according to Claim 1, **characterized in that** a UV absorber having an absorption range of up to 390 nm is present.

5. Coating system according to Claim 1, **characterized in that** a HALS amine is present.

6. Use of the coating systems according to Claim 1 for the production of coatings.

7. Use of the coating systems according to Claim 1 for the coating of automotive body parts.

## Revendications

1. Compositions de revêtement consistant en
a) un uréthane-(méth)acrylate contenant des groupes (méth)acryloyle, qui consiste en un produit de réaction d'alcools monovalents à groupes (méth)acryloyle et d'isocyanates polyvalents, à un rapport de 1:0,2 à 1:0,8 entre les équivalents de groupes NCO et les équivalents de groupes OH,
b) le cas échéant un autre polyisocyanate
c) un inducteur pour UV déclenchant la polymérisation radicalaire et
d) un ou plusieurs liants aqueux contenant des atomes d'hydrogène actif.

2. Composition de revêtement selon la revendication 1, **caractérisée en ce que** le liant aqueux contenant des atomes d'hydrogène actif est un polyol.

3. Composition de revêtement selon revendication 1, **caractérisée en ce que** le rapport entre les équivalents de groupes (méth)acryloyle du composant a) et la somme des équivalents de groupes isocyanate libres des composants a) et b) va de 0,5:2,0 à 2,0:0,5.

4. Compositions de revêtement selon la revendication 1, **caractérisées en ce qu'**elles contiennent un absorbeur d'UV absorbant dans la région allant jusqu'à 390 nm.

5. Composition de revêtement selon revendication 1, **caractérisée en ce qu'**elle contient un stabilisant à la lumière du type amine objet d'un empêchement stérique.

6. Utilisation des compositions de revêtement selon la revendication 1 pour l'application de revêtements.

7. Utilisation des compositions de revêtement selon la revendication 1 pour la peinture de pièces de carrosserie.
